# FASCICULE DE BREVET EUROPEEN

(11) **EP 0 463 906 B1**
(45) Date de publication et mention de la délivrance du brevet: **18.01.1995**
(21) Numéro de dépôt: 91401534.2
(22) Date de dépôt: 11.06.1991
(51) Int. Cl.: C09D 5/32, G02B 23/16

(54) **Corps optiquement absorbant dans le domaine du visible et des infrarouges, et un procédé de fabrication**
In sichtbaren und infraroten Bereich optisch absorbierender Körper und Herstellungsverfahren
Body showing optical absorption in the visible and infrared range and a manufacturing method

(30) Priorité: 26.06.1990 FR 9008016
(43) Date de publication de la demande: 02.01.1992
(73) Titulaire: AEROSPATIALE Société Nationale Industrielle, 75781 Paris Cédex 16 (FR)
(72) Inventeur: Lutz, Martine, Résidence du Lavantin-A36-549, F-06210 Mandelieu (FR)
(74) Mandataire: Santarelli, Marc

(56) Documents cités:
- EP-A- 0 173 460
- EP-A- 0 246 342
- US-A- 4 111 762

## Description

L'invention concerne l'obtention, sur un substrat, d'un revêtement à forte absorption optique dans une large bande de longueurs d'ondes, depuis la lumière visible jusque et y compris dans le domaine des infrarouges lointains (depuis de l'ordre du micron jusqu'à au moins 100-200 µm, de préférence jusqu'à 500 µm environ).

Un tel revêtement est notamment recherché pour recouvrir les baffles de télescopes spatiaux, c'est-à-dire des pièces globalement cylindriques, traversées par un rayonnement incident, et qui ont pour objet d'absorber autant que possible les rayonnements parasites néfastes à la qualité de l'observation (par exemple le rayonnement propre de la Terre et/ou la réflexion par celle-ci de la lumière du Soleil, ou tout autre albedo ...). Il est rappelé à ce propos que, de manière générale, plus on observe loin dans l'infrarouge, plus loin et mieux on est susceptible d'observer dans l'espace, sous réserve bien sûr de pouvoir éliminer les sources d'infrarouge situées à proximité du lieu d'observation.

Un tel revêtement peut toutefois avoir d'autres applications, dans le domaine notamment de l'instrumentation scientifique (optique en particulier), ou dans la simulation au sol de l'espace infini...

A ce jour, il n'existe guère que deux types de revêtement capables de satisfaire l'exigence d'absorption dans un domaine spectral aussi étendu (au-delà de 80-100 µm).

On connaît ainsi tout d'abord une peinture rugueuse appelée HERBERTS 1002E® (il en existe une variante, électriquement conductrice, référencée 1356H), qui s'applique en principe sur un substrat lisse. Cette peinture est en pratique très difficile à mettre en oeuvre (y compris dans le cas de substrats plan ou presque plans) car la rugosité nécessaire au piégeage du rayonnement est créée au fur et à mesure de l'empilement de couches devant obéir à des règles de constructions très strictes pas toujours bien maîtrisables : il faut notamment assurer un contrôle précis de l'évaporation (ni trop, ni trop peu) des solvants entre les couches successives, laquelle évaporation dépend de multiples paramètres dont notamment l'état - vieillissement ... - de la peinture ; compte tenu de ces nombreux paramètres la moins mauvaise manière de faire est de conduire de façon "visuelle" humaine le procédé ; les résultats sont toutefois aléatoires.

On connaît par ailleurs un revêtement, appelé "MARTIN BLACK"®, mis au point par la Société MARTIN MARIETTA DENVER AEROSPACE (Etats-Unis) et décrit dans le brevet US-A-4.111.762. Ce revêtement est noir, a l'aspect du velours et est performant jusqu'à 80 µm environ. Il présente diverses caractéristiques intéressantes, notamment pour des applications spatiales, telles que faible dégazage, excellente tenue en cyclage thermique et faible contamination particulaire ... Il présente toutefois l'inconvénient d'être obtenu par anodisation, ce qui le réserve aux substrats en alliages d'aluminium. En outre sa préparation reste délicate et surtout il est très fragile : le moindre contact le détériore irrémédiablement, ce qui en complique considérablement la manipulation.

Ce revêtement a fait l'objet de perfectionnements, décrits dans le brevet US-A-4.589.972 et est en cours de développement dans cette nouvelle version sous le nom de "INFRA BLACK"®. Ce revêtement a des capacités d'absorption qui s'étendent jusqu'aux environs de 180-200 µm, mais présente les mêmes inconvénients contraignants du "MARTIN BLACK"®, à savoir grande fragilité et réservation aux substrats en alliages d'aluminium.

C'est ainsi que des matériaux tels que l'acier inoxydable, l'invar, le titane ... classiquement utilisés dans l'espace, notamment dans des instruments optiques (où on recherche souvent à minimiser les dilatations thermiques), ne peuvent pas être revêtus par les revêtements "MARTIN BLACK"® ou "INFRA BLACK"®, tandis que leur recouvrement par de la peinture HERBERTS® précitée conduit à des résultats très aléatoires.

L'invention vise à pallier les inconvénients précités en proposant un revêtement permettant d'obtenir une absorption variant peu avec la longueur d'onde sur une large bande de longueurs d'onde, allant depuis le visible jusqu'au-delà de 100 µm, typiquement au delà de 200 µm, voire jusqu'à 500 µm environ, pour une grande variété de natures de substrats (métaux, mais aussi céramiques, voire matières plastiques ...) et selon un procédé aisé à mettre en oeuvre et fiable (facilement automatisable) et pour un coût modéré.

Ce revêtement sera avantageusement adapté à supporter le cyclage thermique, les faibles températures (les observations de rayonnements infrarouges sont souvent effectuées auprès du zéro KELVIN), et à ne donner lieu qu'à un faible dégazage.

L'invention propose à cet effet un corps optiquement absorbant dans le domaine des rayonnements visibles et infrarouges comportant un substrat recouvert par un revêtement, caractérisé en ce que ce revêtement comporte une couche poreuse formée de pigments adaptés à absorber des rayonnements infrarouges dans un liant thermoplastique, cette couche poreuse ayant une profondeur de creux voisine de, voire supérieure à, la longueur d'onde des rayonnements à absorber.

Selon des dispositions préférées éventuellement combinées :
- la couche poreuse comporte également des charges minérales,
- la couche poreuse comporte également du noir de carbone,
- le liant est un mélange de polyamide et de polyoxyméthylène en parts égales,
- les pigments comportent un mélange de pigments "VAT BLUE 4"® et "VAT BROWN 3"®,
- ladite couche poreuse est déposée sur une surface rugueuse,
- cette couche poreuse recouvre une sous-couche rugueuse déposée sur le substrat,
- cette sous-couche a une rugosité d'au moins 100 µmRa,
- le substrat étant métallique, la sous-couche est en aluminiure de nickel,
- ce revêtement a une rugosité R_{T} d'au moins 200 µm.

L'invention propose également un procédé de fabrication d'un corps optiquement absorbant dans le domaine des rayonnement visibles et infrarouges, selon lequel on dépose un revêtement sur un substrat, caractérisé en ce qu'il comporte une étape au cours de laquelle on prépare une poudre de granulométrie inférieure ou égale à environ 100 µm, comportant un mélange de pigments adapté à absorber des rayonnements infrarouges et d'un liant thermoplastique, puis une étape au cours de laquelle on dépose cette poudre par projection thermique sous la forme d'une couche poreuse ayant une profondeur de creux voisine de, voire supérieure à, la longueur d'onde des rayonnements à absorber.

On appréciera que du fait de son caractère poreux, la couche superficielle se distingue fondamentalement d'une couche de peinture.

Selon des dispositions préférées, éventuellement combinées :
- cette projection thermoplastique est effectuée au pistoletflamme oxypropane,
- l'on procède au dépôt de cette couche en plusieurs passes,
- la couche comporte également des charges minérales,
- la couche poreuse comporte également du noir de carbone,
- le liant est un mélange de polyamide et de polyoxyméthylène en parts égales,
- les pigments sont des pigments "VAT BLUE 4"® et "VAT BROWN 3"®,
- la poudre a une granulométrie inférieure à 100 µm,
- l'étape de dépôt de cette couche poreuse se fait sur une surface rugueuse,
- cette surface rugueuse est obtenue par dépôt sur le substrat d'une sous-couche rugueuse, par projection thermique,
- cette projection se fait au pistolet-flamme oxyacétylénique,
- le substrat étant métallique, cette couche est en aluminiure de nickel.

On appréciera que le procédé de l'invention s'applique à une grande variété de substrats, métalliques ou non, et est de mise en oeuvre aisée y compris pour des substrats non plans, du moment que la géométrie du corps considéré n'empêche pas l'accès à un pistolet de projection thermique.

Des objets, caractéristiques et avantages de l'invention ressortent de la description qui suit, donnée à titre d'exemple non limitatif, en regard des dessins annexés sur lesquels :
- les figures 1A à 1D représentent quatre phases successives dans la préparation d'un corps absorbant selon l'invention, vu en coupe,
- la figure 2 est une vue de principe du matériel utilisé, et
- la figure 3 est un graphique corrélant, pour plusieurs corps absorbants conformes à l'invention et à l'art antérieur, respectivement, le pourcentage de rayonnement réfléchi en fonction de la longueur d'onde du rayonnement incident.

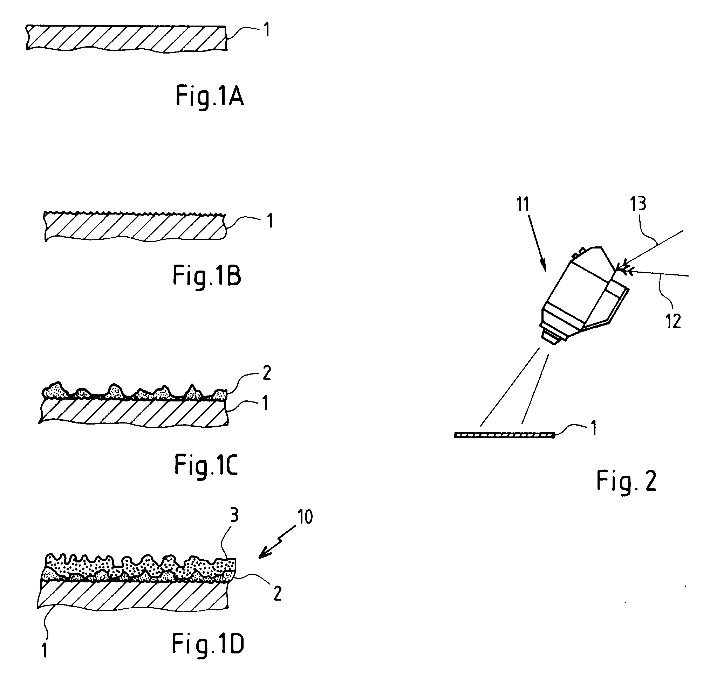

Les figures 1A à 1D présentent, vu en coupe, la préparation d'un corps absorbant conforme à l'invention noté 10, à partir d'un substrat 1, par exemple métallique (un acier inoxydable en pratique), initialement lisse.

Dans une première phase, on procède à une préparation de la surface du substrat métallique 1 ; il s'agit en pratique d'un sablage fin : on obtient l'état de surface de la figure 1B (cela correspond typiquement à une rugosité de l'ordre de 4-5 µm Ra).

Dans une deuxième phase, qui est recommandée pour atteindre une absorption satisfaisante sensiblement au delà de 100 µm, on dépose par projection thermique une sous-couche rugueuse 2 en un matériau admettant une grande adhérence sur le substrat considéré (il s'agit de préférence d'une sous-couche d'aluminiure de nickel qui présente une bonne adhérence (avec réaction exothermique) sur la plupart des métaux considérés dans les applications spatiales (acier inoxydable, alliage d'aluminium, invar - de préférence recouvert de nickel chimique -) ).

Ce dépôt se fait à l'aide d'un pistolet-flamme oxy-acétylénique dont les paramètres de réglage sont volontairement choisis pour aboutir à une grande rugosité.

A titre d'exemple, on utilise un cordon d'aluminiure de nickel de 4,75 mm de diamètre, les paramètres de projection thermique étant :
- pression d'oxygène : 4,8 bars
- pression d'acétylène : 1,2 bar
- buse à air SF ; pression 4 bars.

La figure 2 représente de façon schématique le pistolet-flamme 11, de tout type connu approprié, avec ses alimentations en poudre 12 et en oxygène/acétylène 13. En fait un tel pistolet dégage une chaleur importante de sorte que, avantageusement, le substrat est refroidi à l'opposé de la surface à traiter. Pour obtenir un échauffement moindre, le pistolet-flamme peut être avantageusement remplacé par un pistolet à arc électrique.

On peut également penser à procéder à une agression mécanique du substrat, suffisante pour le rendre rugueux, sous réserve que son épaisseur lui permette d'y résister sans déformation d'ensemble (plus de 1-2 mm). Des agressions chimiques peuvent également être envisagées (par exemple dans le cas de substrats en matières plastiques).

Une fois la sous-couche 2 formée (voir la figure 1C) on dépose une couche absorbante poreuse 3, formée d'une poudre constituée d'un mélange finement broyé de pigments à forte absorption dans l'infrarouge (en pratique organiques, connus en soi) et d'un liant thermoplastique. D'autres charges de tout type connu approprié peuvent être ajoutées en fonction d'objectifs complémentaires à atteindre (conductivité électrique par exemple, grâce à du noir de carbone, ou des charges minérales).

Il est à noter qu'il est classique d'utiliser de tels pigments dans un liant thermo-durcissable (peintures) mais pas dans un liant thermoplastique.

Un tel liant thermoplastique est plus simple à mettre en oeuvre puisque, à la différence des liants thermodurcissables, il n'évolue guère dans le temps. Par contre, il conviendra de bien choisir sa nature chimique (présence de groupements polaires sur le polymère) pour obtenir une bonne adhérence sur métaux. Cette adhérence sera d'autant plus favorisée par un substrat rugueux (sous-couche 2).

Comme les pigments sont généralement organiques, il faut en principe maintenir leur température en-dessous d'un seuil peu élevé, typiquement de l'ordre de 200 °C et il faut que le liant associé n'ait pas une température de ramollissement sensiblement supérieure à ce seuil.

Dans le cas considéré la poudre comporte 60 % d'un mélange de polyamide (PA-11) et de polyoxyméthylène (à parts égales) et 40 % d'un mélange de pigments "VAT BLUE 4"® et "VAT BROWN 3"® - ce sont des pigments organiques anthraquinoniques - (en parts égales). L'ensemble a été broyé pour obtenir une granulométrie inférieure à 100 µm.

Le dépôt de cette couche absorbante poreuse 3 se fait par projection thermique, dans des conditions thermiques moins sévères que pour la sous-couche 2, et compatibles avec la nature des pigments.

On utilise par exemple un pistolet-flamme oxypropane ; il s'agit de préférence d'un type spécial pour poudres plastiques, type SP2, à injection latérale. Les paramètres de projection sont par exemple :
- pression d'oxygène : 3 bars
- pression de propane : 3 bars
- pression d'air : 1,1 bar
- distribution de poudre : pression de 3 bars.

La formation de cette couche se fait avantageusement en plusieurs passes (par exemple 4 passes de 50 µm d'épaisseur en quelques fractions de seconde pour chaque passe), ce qui, combiné à un éventuel refroidissement au dos du substrat, permet de maintenir la température de la poudre à environ 100°C.

On choisit en pratique pour l'ensemble (sous-couche (si elle existe) et couche) une profondeur de creux (coefficient de rugosité R_{T}) voisine de (voire supérieure à) la longueur d'onde d'observation nominale (200 µm dans l'exemple particulier considéré ci-dessus) avec un coefficient de rugosité Ra à peine inférieur (de 100 à 150 µm).

Des essais ont montré qu'un tel revêtement 2+3 présente notamment une bonne tenue en cyclage thermique (par exemple à 30 cycles entre 4K et 300 K).

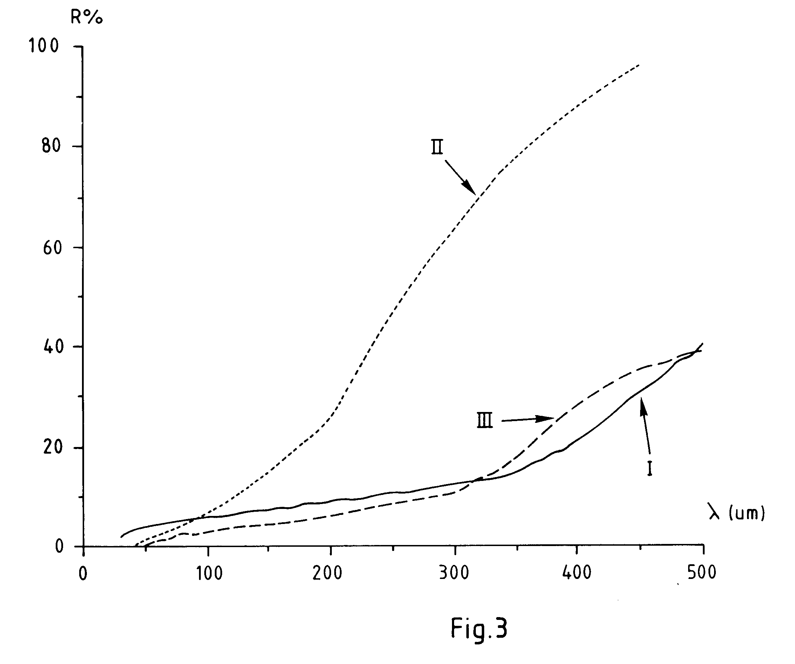

La figure 3 permet de comparer divers matériaux du point de vue réflexion spéculaire à T = 7K en fonction de la longueur d'onde entre 20 et 450-500 µm.

La courbe I en trait plein correspond à un corps revêtu d'une couche de 400 µm de peinture HERBERTS 1002E®. On constate que le coefficient R de réflexion reste inférieur à 20 % jusqu'à environ 400 µm.

La couche II en pointillés correspond à un échantillon conforme à l'invention, comportant une couche directement déposée sur le substrat lisse. Le coefficient R reste inférieur à 20 % jusqu'à 180 µm environ.

La courbe III en tiretés correspond à un échantillon conforme à la figure 1D, comportant donc une couche poreuse sur une sous-couche rugueuse (pouvant laisser de place en place le substrat à nu, au fond des creux). On constate que le coefficient R reste inférieur à 20 % jusqu'à plus de 350 µm en étant équivalent à celui de la couche I (différence inférieure à la précision de la mesure).

On appréciera que l'invention a ainsi permis d'approcher, de manière tout à fait surprenante, le niveau de performances de la peinture HERBERTS 1002E® avec une procédure de mise en oeuvre tout à fait rudimentaire, donc bon marché.

## Revendications

1. Corps optiquement absorbant dans le domaine des rayonnements visibles et infrarouges comportant un substrat (1) recouvert par un revêtement, caractérisé en ce que ce revêtement comporte une couche poreuse (3) formée de pigments adaptés à absorber des rayonnements infrarouges dans un liant thermoplastique, cette couche poreuse ayant une profondeur de creux (rugosité R_{T}) voisine de, voire supérieure à, la longueur d'onde des rayonnements à absorber.

2. Corps optiquement absorbant selon la revendication 2, caractérisé en ce que la couche poreuse comporte également des charges minérales.

3. Corps optiquement absorbant selon la revendication 1 ou la revendication 2, caractérisé en ce que la couche poreuse comporte également du noir de carbone.

4. Corps optiquement absorbant selon l'une quelconque des revendications 1 à 3, caractérisé en ce que le liant est un mélange de polyamide et de polyoxyméthylène en parts égales.

5. Corps optiquement absorbant selon l'une quelconque des revendications 1 à 4, caractérisé en ce que les pigments comportent un mélange de pigments organiques anthraquinoniques.

6. Corps optiquement absorbant selon l'une quelconque des revendications 1 à 5, caractérisé en ce que ladite couche poreuse est déposée sur une surface rugueuse.

7. Corps optiquement absorbant selon la revendication 6, caractérisé en ce que cette couche poreuse recouvre une sous-couche rugueuse déposée sur le substrat.

8. Corps optiquement absorbant selon la revendication 7, caractérisé en ce que cette sous-couche a une rugosité d'au moins 100 µmRa.

9. Corps optiquement absorbant selon la revendication 7 ou la revendication 8, caractérisé en ce que, le substrat étant métallique, la sous-couche est en aluminiure de nickel.

10. Corps optiquement absorbant selon l'une quelconque des revendications 1 à 9, caractérisé en ce que ce revêtement a une rugosité R_{T} d'au moins 200 µm.

11. Procédé de fabrication d'un corps optiquement absorbant dans le domaine des rayonnement visibles et infrarouges, selon lequel on dépose un revêtement sur un substrat, caractérisé en ce qu'il comporte une étape au cours de laquelle on prépare une poudre de granulométrie inférieure ou égale à environ 100 µm, comportant un mélange de pigments adapté à absorber des rayonnements infrarouges et d'un liant thermoplastique, puis une étape au cours de laquelle on dépose cette poudre par projection thermique sous la forme d'une couche poreuse ayant une profondeur de creux (rugosité R_{T}) voisine de, voire supérieure à, la longueur d'onde des rayonnements à absorber.

12. Procédé de fabrication selon la revendication 11, caractérisé en ce que cette projection thermoplastique est effectuée au pistolet-flamme oxypropane.

13. Procédé de fabrication selon la revendication 11 ou la revendication 12, caractérisé en ce que l'on procède au dépôt de cette couche en plusieurs passes.

14. Procédé de fabrication selon l'une quelconque des revendications 11 à 13, caractérisé en ce que la couche comporte également des charges minérales.

15. Procédé de fabrication selon l'une quelconque des revendications 11 à 14, caractérisé en ce que la couche poreuse comporte également du noir de carbone.

16. Procédé de fabrication selon l'une quelconque des revendications 11 à 15, caractérisé en ce que le liant est un mélange de polyamide et de polyoxyméthylène en parts égales.

17. Procédé de fabrication selon l'une quelconque des revendications 11 à 16, caractérisé en ce que les pigments sont des pigments organiques anthraquinoniques.

18. Procédé de fabrication selon l'une quelconque des revendications 11 à 17, caractérisé en ce que la poudre a une granulométrie inférieure à 100 µm.

19. Procédé de fabrication selon l une quelconque des revendications 11 à 18, caractérisé en ce que l'étape de dépôt de cette couche poreuse se fait sur une surface rugueuse.

20. Procédé de fabrication selon la revendication 19, caractérisé en ce que cette surface rugueuse est obtenue par dépôt sur le substrat d'une sous-couche rugueuse, par projection thermique.

21. Procédé de fabrication selon la revendication 20, caractérisé en ce que cette projection se fait au pistolet-flamme oxyacétylénique.

22. Procédé de fabrication selon la revendication 20 ou la revendication 21, caractérisé en ce que le substrat étant métallique, cette couche est en aluminiure de nickel.

## Claims

1. Body adapted to absorb visible light and infra-red radiation comprising a substrate (1) covered with a coating, characterised in that this coating comprises a porous layer (3) formed of pigments adapted to absorb infra-red radiation in a thermoplastic binder, said porous layer having a valley depth (roughness R_{T}) close to, or even greater than, the wavelength of the radiation to be absorbed.

2. Body according to claim 1, characterised in that the porous layer also comprises mineral additives.

3. Body according to claim 1 or claim 2, characterised in that the porous layer also contains carbon black.

4. Body according to any one of claims 1 through 3, characterised in that the binder is an equal parts mixture of polyamide and polyoxymethylene.

5. Body according to any one of claims 1 through 4, characterised in that the pigments comprise a mixture of anthraquinone organic pigments.

6. Body according to any one of claims 1 through 5, characterised in that said porous layer is deposited onto a rough surface.

7. Body according to claim 6, characterised in that said porous layer covers a rough sub-layer deposited onto the substrate.

8. Body according to claim 7, characterised in that said sub-layer has a roughness of at least 100 µm Ra.

9. Body according to claim 7 or claim 8, characterised in that the substrate is metal and the sub-layer is nickel aluminide.

10. Body according to any one of claims 1 through 9, characterised in that said coating has a roughness R_{T} of at least 200 µm.

11. Method of manufacturing a body adapted to absorb visible light and infra-red radiation, in which method a coating is deposited onto a substrate, characterised in that it comprises a stage during which a powder having a particle size less than or equal to around 100 µm comprising a mixture of pigments adapted to absorb infra-red radiation and a thermoplastic binder is prepared, followed by a stage in which said powder is deposited by thermal sputtering in the form of a porous layer, said porous layer having a valley depth (roughness R_{T}) close to, or even greater than, the wavelength of the radiation to be absorbed.

12. Manufacturing method according to claim 11, characterised in that said thermoplastic sputtering is carried out using an oxypropane flame gun.

13. Manufacturing method according to claim 11 or claim 12, characterised in that said layer is deposited in a number of passes.

14. Manufacturing method according to any one of claims 11 through 13, characterised in that the layer also contains mineral additives.

15. Manufacturing method according to any one of claims 11 through 14, characterised in that the porous layer also contains carbon black.

16. Manufacturing method according to any one of claims 11 through 15, characterised in that the binder is a mixture of equal parts of polyamide and polyoxymethylene.

17. Manufacturing method according to any one of claims 11 through 16, characterised in that the pigments are anthraquinone organic pigments.

18. Manufacturing method according to any one of claims 11 through 17, characterised in that the powder has a particle size of less than 100 µm.

19. Manufacturing method according to any one of claims 11 through 18, characterised in that the porous layer is deposited onto a rough surface.

20. Manufacturing method according to claim 19, characterised in that the rough surface is obtained by depositing a rough sub-layer onto the substrate by thermal sputtering.

21. Manufacturing method according to claim 20, characterised in that an oxyacetylene flame gun is used for said sputtering.

22. Manufacturing method according to claim 20 or claim 21, characterised in that the substrate is metal and said layer is nickel aluminide.

## Patentansprüche

1. Im Bereich der sichtbaren Strahlen und der Infrarotstrahlen optisch absorbierender Körper, der ein mit einem Überzug bedecktes Substrat (1) umfaßt, dadurch gekennzeichnet, daß dieser Überzug eine poröse Schicht (3) umfaßt, die von Pigmenten, die dafür ausgelegt sind, Infrarotstrahlen zu absorbieren, in einem thermoplastischen Bindemittel gebildet ist, wobei diese poröse Schicht eine Vertiefungstiefe (Rauheit R_{T}) hat, die nahe der Wellenlänge der zu absorbierenden Strahlen und sogar größer als diese ist.

2. Optisch absorbierender Körper nach Anspruch 2, dadurch gekennzeichnet, daß die poröse Schicht auch mineralische Füllstoffe umfaßt.

3. Optisch absorbierender Körper nach Anspruch 1 oder Anspruch 2, dadurch gekennzeichnet, daß die poröse Schicht auch Ruß umfaßt.

4. Optisch absorbierender Körper nach einem der Ansprüche 1 bis 3, dadurch gekennzeichnet, daß das Bindemittel eine Mischung aus Polyamid und Polyoxymethylen in gleichen Anteilen ist.

5. Optisch absorbierender Körper nach einem der Ansprüche 1 bis 4, dadurch gekennzeichnet, daß die Pigmente eine Mischung aus organischen Anthrachinonpigmenten umfassen.

6. Optisch absorbierender Körper nach einem der Ansprüche 1 bis 5, dadurch gekennzeichnet, daß diese poröse Schicht auf eine rauhe Oberfläche aufgebracht ist.

7. Optisch absorbierender Körper nach Anspruch 6, dadurch gekennzeichnet, daß diese poröse Schicht eine auf das Substrat aufgebrachte rauhe Unterschicht bedeckt.

8. Optisch absorbierender Körper nach Anspruch 7, dadurch gekennzeichnet, daß diese Unterschicht eine Rauheit von mindestens 100 µmRa hat.

9. Optisch absorbierender Körper nach Anspruch 7 oder Anspruch 8, dadurch gekennzeichnet, daß die Unterschicht, wenn das Substrat metallisch ist, aus Nickelaluminid besteht.

10. Optisch absorbierender Körper nach einem der Ansprüche 1 bis 9, dadurch gekennzeichnet, daß der Überzug eine Rauheit R_{T} von mindestens 200 µm hat.

11. Verfahren zur Herstellung eines im Bereich der sichtbaren Strahlen und der Infrarotstrahlen optisch absorbierenden Körpers, gemäß welchem ein Überzug auf ein Substrat aufgebracht wird, dadurch gekennzeichnet, daß es einen Schritt, in dem man ein Pulver mit einer Korngröße von weniger als oder gleich etwa 100µm herstellt, das eine Mischung aus Pigmenten, die dafür ausgelegt sind, Infrarotstrahlen zu absorbieren, und aus einem thermoplastischen Bindemittel umfaßt, und dann einen Schritt umfaßt, in dem man dieses Pulver durch thermisches Spritzen in der Form einer porösen Schicht mit einer Vertiefungstiefe (Rauheit R_{T}) aufbringt, die nahe der Wellenlänge der zu absorbierenden Strahlen und sogar größer als diese ist.

12. Herstellungsverfahren nach Anspruch 11, dadurch gekennzeichnet, daß dieses thermoplastische Spritzen mit der Oxipropan-Flammpistole durchgeführt wird.

13. Herstellungsverfahren nach Anspruch 11 oder Anspruch 12, dadurch gekennzeichnet, daß die Aufbringung dieser Schicht in mehreren Durchgängen vorgenommen wird.

14. Herstellungsverfahren nach einem der Ansprüche 11 bis 13, dadurch gekennzeichnet, daß die Schicht auch mineralische Füllstoffe umfaßt.

15. Herstellungsverfahren nach einem der Ansprüche 11 bis 14, dadurch gekennzeichnet, daß die poröse Schicht auch Ruß umfaßt.

16. Herstellungsverfahren nach einem der Ansprüche 11 bis 15, dadurch gekennzeichnet, daß das Bindemittel eine Mischung aus Polyamid und Polyoxymethylen in gleichen Anteilen ist.

17. Herstellungsverfahren nach einem der Ansprüche 11 bis 16, dadurch gekennzeichnet, daß die Pigmente organische Anthrachinonpigmente sind.

18. Herstellungsverfahren nach einem der Ansprüche 11 bis 17, dadurch gekennzeichnet, daß das Pulver eine Korngröße von unter 100 µm hat.

19. Herstellungsverfahren nach einem der Ansprüche 11 bis 18, dadurch gekennzeichnet, daß der Schritt der Aufbringung dieser porösen Schicht auf einer rauhen Oberfläche geschieht.

20. Herstellungsverfahren nach Anspruch 19, dadurch gekennzeichnet, daß diese rauhe Oberfläche durch Aufbringen einer rauhen Unterschicht auf das Substrat durch thermisches Spritzen erhalten wird.

21. Herstellungsverfahren nach Anspruch 20, dadurch gekennzeichnet, daß dieses Spritzen mit der Oxiacetylen-Flammpistole vor sich geht.

22. Herstellungsverfahren nach Anspruch 20 oder Anspruch 21, dadurch gekennzeichnet, daß diese Schicht, wenn das Substrat metallisch ist, aus Nickelaluminid besteht.
